# EUROPEAN PATENT SPECIFICATION

(11) **EP 3 062 005 B1**
(45) Date of publication and mention of the grant of the patent: **24.10.2018**
(21) Application number: 15156255.0
(22) Date of filing: 24.02.2015
(51) Int. Cl.: F16K 39/00, F16K 1/00, F17C 13/04

(54) **PRESSURIZED FLUID CYLINDER TAP AND A CYLINDER COMPRISING SUCH A TAP**
DRUCKFLÜSSIGKEITSZYLINDERHAHN UND ZYLINDER MIT SOLCH EINEM HAHN
ROBINET DE CYLINDRE À FLUIDE SOUS PRESSION ET CYLINDRE COMPORTANT UN TEL ROBINET

(43) Date of publication of application: 31.08.2016
(73) Proprietor: L'AIR LIQUIDE, Société Anonyme pour l'Etude et l'Exploitation des Procédés Georges Claude, 75321 Paris Cedex 07 (FR)
(72) Inventor: Bendazzoli, Silvano, 37134 VERONA (IT); Ferronato, Luca, 37139 VERONA (IT); Travagliati, Lucia, 37126 VERONA (IT); Pezzo, Ivan, 37036 SAN MARTINO BUON ALBERGO (IT)
(74) Representative: De Cuenca, Emmanuel Jaime

(56) References cited:
- CA-A1- 973 057
- FR-A5- 2 203 482
- GB-A- 1 061 254
- US-A- 2 864 400
- US-A- 3 903 914

## Description

The present invention concerns a pressurized fluid cylinder tap and a cylinder comprising such a tap.

The invention concerns more particularly a pressurized fluid cylinder tap comprising a body enclosing a gas passage, the gas passage comprising an upstream end and a downstream end, the tap comprising a shut-off valve located in the gas passage, the shut-off valve comprising a shutter element which is movable relative to a valve seat between a closed position and at least one open position to selectively close or open the gas passage, the tap comprising a pivoting lever which is mechanically coupled to the shutter element so that rotation of the lever between a first position and a second position causes motion of the shutter element between the closed and open positions.

Taps (also named valves) for gas cylinders comprising a pivoting lever for actuating the shut-off valve are well known (see for example document FR2828922A1). Those devices comprise generally a lever pivoting on the valve casing. The lever comprises a cam which cooperates with a transmission pin for selectively actuating a mobile obturator with respect to a seat in a gas passage.

When the lever is in the closed position a spring pushes the obturator on the sealing seat and closes the gas passage. A cap might be located between the cam and the transmission pin. The cap and the transmission pin may be free between the lever and the obturator. When the lever is brought in its open position, the cam lever profile causes the pushing of the transmission pin which in turn moves the obturator, allowing the gas passage to open.

The lever opening and then the obturator opening can be very fast, thus the outlet pressure increase can be very rapid. This effect may cause rapid compression of a downstream circuit. This rapid increase of pressure may damage equipments connected downstream of the cylinder valve.

One objective of the present invention is to solve at least partially one of the problems above mentioned.

Document US3903914 discloses a pressurized fluid cylinder tap according to preamble of claim 1 (see also documents FR2203482, US2864400, CA973057 and GB1061254).

In such cylinder tap the shut-off valve comprises two distinct shutter elements, respectively first shutter element and second shutter element, the two shutter elements being movable relative to the valve seat between respective closed and open positions, in their respective open positions the two shutter elements defining respective flow passage sections in the gas passage, the shut-off valve being configured so that, when the lever is moved from its first position to its second position it causes first the motion of the first shutter toward it open position before causing the motion of second shutter toward its open position, the flow passage section opened by the first shutter being smaller than the flow passage section opened by the second shutter), the tap comprising a resilient element such as a spring urging the second shutter element toward its closed position.

First and second shutter elements are biased toward their closed position by a common resilient element such as a spring as defined in preamble of claim 1.

The invention is defined by additional features of characterizing part of claim 1.

Furthermore, embodiments might include one or several of the features below:
- first shutter element and second shutter element are movable relative to the valve seat according to a linear motion along a longitudinal direction and, wherein, first and second shutters are mounted concentrically around the longitudinal direction,
- first shutter element is mounted mobile relative to the second shutter element within said second shutter element,
- the second shutter element comprises an internal passage having a determined flow section, the first shutter element being mobile within said internal passage, between a closed position closing the internal passage and an open position opening the internal passage, the tap comprising a resilient member such as a spring urging the first shutter toward its closed position,
- the transmission pin comprises an upstream end for mechanically cooperating with an downstream end of the valve shutter in order to move said valve shutter from the closed position to the open position when the lever is pivoted between its first and second positions, and wherein, when the two shutter elements are in their closed position; the first shutter element comprises an downstream end which is closer to the upstream end of the transmission pin than the downstream end of the second shutter element, so that first shutter element is actuated and moved in its open position by the transmission pin before the second shutter element,
- the shut-off valve is configured so that, when the gas pressure in the upstream end exceeds a defined pressure difference threshold with respect to the downstream end, the gas pressure urges the second shutter element toward its closed position and, when first shutter is opened, the gas flow from upstream to downstream makes the gas pressure difference between upstream end and the downstream end reduced thus lowering the effort needed to move the second shutter element toward its open position,
- when the lever is moved from its first position to its second position, it actuates the motion of the first shutter toward its open position so that only first shutter element is open and, afterwards, the second shutter is also moved toward its open position so that both shutter elements are opened and, when the lever is moved from its second position to its first position it causes both shutter elements to come back to their closed positions,
- the ratio between the flow passage section opened by the first shutter and the flow passage section opened by the second shutter is lower than 20% and preferably lower than 5%.

Other features and advantages will be apparent to the reading of the below description, made with reference to the drawings wherein:
- figure 1 depicts a schematic and partial side view of a pressurized fluid cylinder that can include the invention
- figure 2 depicts a schematic and partial vertical cut view of a pressurized fluid cylinder tap according to one possible embodiment of the invention in a first closed state,
- figure 3 depicts a schematic and partial vertical cut view of the pressurized fluid cylinder tap of figure 2 moving toward a second open state,
- figure 4 depicts a schematic and partial vertical cut view of the pressurized fluid cylinder tap of figure 2 in the second open state,
- figure 5 depicts a schematic and partial vertical cut view of the pressurized fluid cylinder tap of figure 2 in a third open state.

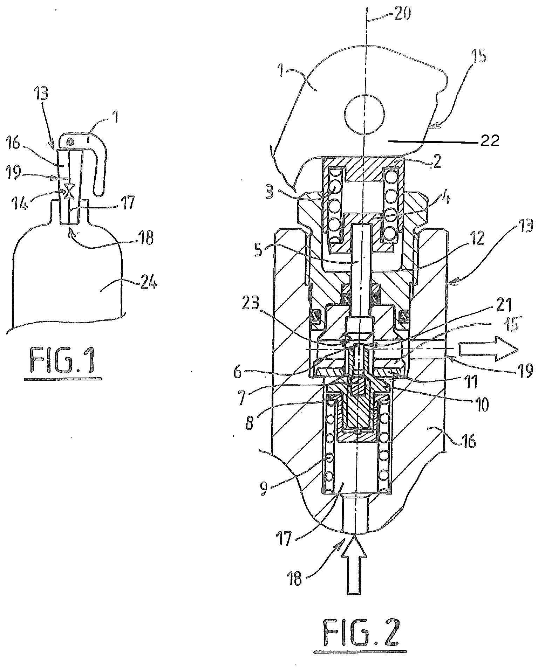

Figure 1 depicts schematically and partially a pressurized fluid cylinder 24 comprising a tap 13. The tap 13 comprises a body 16 enclosing a gas passage 17.

The gas passage 17 comprises at least an upstream end 18 (for example connected to the inner volume of the cylinder) and a downstream end 19 (for example linked to an outlet port). The gas flow progress from upstream to downstream is illustrated with two arrows.

The tap 13 comprises a shut-off valve 14 located in the gas passage 17.

Figure 1 is of course simplified, the gas passage may include other(s) functional organ(s) such a as: a filter, a pressure regulating valve, a residual pressure valve , a flow regulator, a safety valve (temperature and/or pressure releasing device), pressure sensor...

The shut-off valve 14 comprises a shutter element (i.e. an obturator or valve shutter) which is movable relative to a valve seat between a closed position and at least one open position to selectively close or open the gas passage. The tap 13 comprises a pivoting lever 1 which is mechanically coupled to the shutter element so that rotation of the lever 1 between a first position and a second position causes motion of the shutter element between the closed and open positions.

According to the invention and as shown on figure 2, the shut-off valve comprises two distinct shutter 7, 10 elements, respectively first shutter 7 element and second 10 shutter element.

The two shutter elements 7, 10 are mobile relative to the valve seat 11 between respective closed and open positions. The movements of the two shutter elements 7, 10 are at least partly independent. This means that at least one shutter element (example first 7) can be moved to its open position while the other (for example the second 10) remains closed.

In their respective open positions the two shutter elements 7, 10 defining respective (different) flow passage sections in the gas passage 17.

The shut-off valve 14 being configured so that, when the lever 1 is moved from its first position to its second position it causes first the motion of the first shutter 7 toward it open position before causing the motion of second shutter 10 toward its open position. In addition the flow passage section opened by the first shutter 7 is preferably smaller than the flow passage section opened by the second shutter 10.

This structure allows a progressive opening of the shut-off valve and thus a more progressive pressure increase downstream the open shut off valve as will be illustrated below with reference to example of the drawings.

First shutter 7 element and second 10 shutter element are preferably arranged in parallel in the gas passage. That is to say the two shutter elements are functionally in parallel but their opening is arranged is series (sequentially).

First shutter element 7 and second shutter element 10 are movable relative to a valve seat 11 according to a linear motion along a longitudinal direction 20. As shown, in the figures, first and second shutters 7, 10 can be mounted concentrically around the longitudinal direction 20.

For example, first shutter 7 element is mounted mobile relative to the second shutter element 10 within said second shutter element 10. In particular, second shutter element 10 may comprise an internal passage having a determined flow section, the first shutter element 7 being mobile within said internal passage between a closed position closing the internal passage and an open position opening the internal passage. For example, the internal passage defines a seat for cooperating in sealing manner with the first shutter element 7 in its closed position.

In its open position the first shutter element 7 allows the fluid to flow in the gas passage 17 via the internal passage.

As depicts on the figures, the tap comprises a resilient member 9 such as a spring urging the first shutter 7 toward its closed position.

In addition, a resilient element such as a spring 9 urges also the second shutter element 10 toward its closed position.

Preferably, both shutter elements 7, 10 are biased toward their closed position by a common resilient element or common spring 9.

Compression spring 9 or the like is arranged in the gas passage 17 so that one first of its ends stand on a fixed abutment in the body 16 and a second end push the second shutter element 10 (and also the first shutter element 7) toward the seat 11. For example, a spring pusher 8 might be placed between said spring 9 and the first and second shutter elements 7, 10. The spring pusher 8 may comprise a cap shape receiving in its cavity a portion of the shutter elements 7, 10.

As shown in the example of the figures, the pivoting lever 1 is mechanically coupled to the valve shutter via a cam 15 cooperating with a mobile transmission pin 5 (moving in translation along an axis 20).

As shown in the figures, the mechanism coupling the pivoting lever 1 to the valve shutter comprises a transmission spring 3 located in series between the lever 1 and the transmission pin 5. The transmission spring 3 (for example a compression spring) is sandwiched between a downstream cap 2 in contact with the cam lever 1 and an upstream plate 4 in contact with an downstream end of the transmission pin 5.

Cap 2, transmission spring 3, plate 4 and transmission pin 5 might be located in a clamping nut screwed into the body 16 and guiding the cap 2.

The transmission pin 5 comprises an upstream end 23 for mechanically cooperating with a downstream end of the valve shutters 7, 10 in order to move said valve shutters 7, 10 from the closed position to the open position (when the lever 1 is pivoted between its first and second positions).

As shown in figure 2, when the two shutter elements 7, 10 are in their closed position; the first shutter 7 element comprises a downstream end 21 which protrudes with respect to the second shutter element 10. This downstream end 21 may belong to a pin 6. This end 21 may belong to the first shutter element 7 or may be a distinct pin cooperating with said first shutter element 7.

This means that the first shutter 7 end 21 is closer to the upstream end 23 of the transmission pin 5 than the downstream end of the second shutter element 10. This means that, when the transmission pin is move toward the shutter elements 7, 10, first shutter element 7 is actuated and moved (in this example pushed via downstream pin end 21) in its open position by the transmission pin 5 before the second shutter element 10.

An example of operation will be disclosed now with respect to the figures.

When the lever 1 is in closed position (figure 2), the upstream spring 9 (urging the shutter elements 7, 10) pushes the spring-pusher 8 upwards (downstream toward the seat 11). In turn, the spring-pusher 8 pushes :
- the first shutter element 7 against (within) the second shutter element 10 and
- the second shutter element 10 against the sealing seat 11.

This causes the closure of both first and second shutters elements 7, 10 and thus closes the gas passage 17.

The cap 2, the transmission spring 3, the plate 4 the transmission pin 5 and the first shutter element pin 6 may be free between the lever 1 and both shutter elements 7, 10.

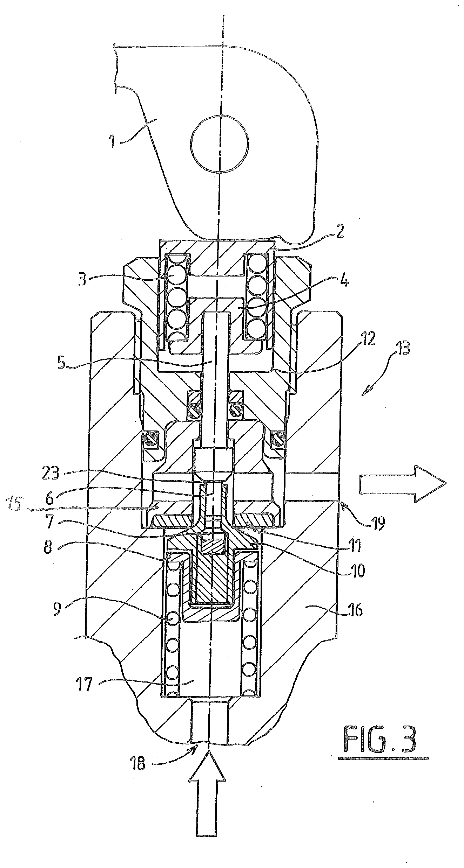

When the lever 1 is brought (pivoted) into the open position (see figure 3), the lever profile (cam 15) pushes down on the cap 2, which compresses the transmission spring 3.

The compressed transmission spring 3 pushes down the plate 4 and the transmission pin 5. During its downward movement, the transmission pin 5 is or comes in contact with the first shutter element pin 6 exiting from the second shutter element 10.

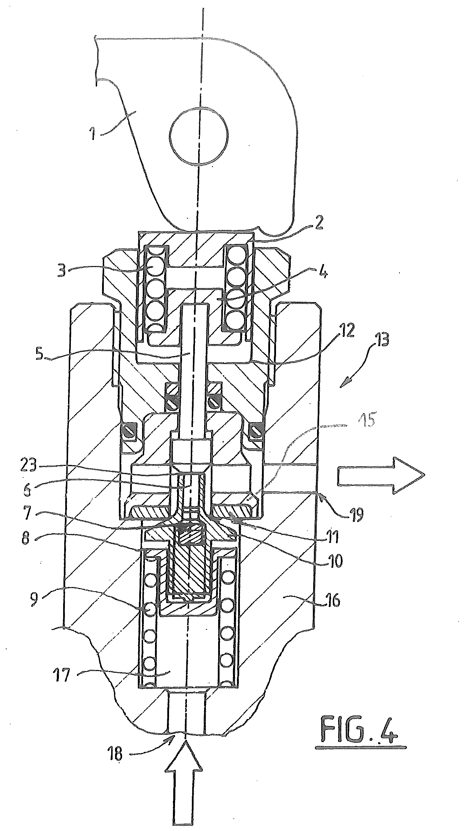

The first shutter element pin 6 downloads the force exerted by the downstream spring 3 on the first shutter element 7, thus opening the internal passage and proceeding to state of figure 4.

The first shutter element 7 is opened until the transmission in 5 reaches the second shutter element 10.

If the pressure difference existing between the upstream 18 and the downstream 19 is above a defined threshold, a large part of the force exerted from the transmission pin 5 is balanced by the force that derives from the pressure difference between the two sides of second shutter element 10. Consequently the force with which the transmission pin 5 pushes the second shutter element 10 is not sufficient for its opening .

Furthermore, the high pressure difference between upstream 18 (input) and downstream 19 (output) drives the second shutter element 10 towards the sealing seat 11 maintaining it in its closed position. The first shutter element 7 flow passage section is very small as compared to the flow passage defined by seat 11. Thus, when open, the flow passage of the internal gas passage limits the gas flow rate between the upstream and the downstream. The pressure increase in the outlet chamber is therefore very gradual.

For example, that ratio between the flow passage section opened by the first shutter 7 and the flow passage section opened by the second shutter 10 is lower than 20% and preferably lower than 5%

As the pressure in the outlet (downstream) chamber increase, this will cause two effects. First, the force required to hold open the first shutter element 7 is lowered and therefore the transmission pin 5 will exerts a higher force on the second shutter element 10. Second, the second shutter element 10 effort against its sealing seat is proportionally lowered.

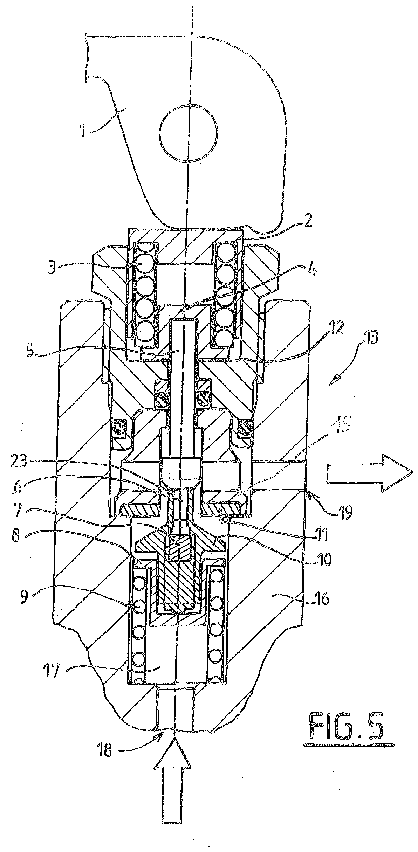

When reaching a certain downstream pressure value, the force exerted from the transmission pin 5 on the second shutter element 10 will exceed the force magnitude exerted by the pressure difference on this second shutter element 10. This will progressively cause the opening switching illustrated at figure 5.

The second shutter element 10 opens fully until the plate 4 is in contact with the end of the clamping nut 12. The passage section opened by the second shutter element 10 is now much bigger and particularly sufficient to ensure the required flow rate for the downstream user (for example a section of about 12 mm²).

## Claims

1. A pressurized fluid cylinder tap (13) comprising a body (16) enclosing a gas passage (17), the gas passage (17) comprising an upstream end (18) and a downstream end (19), the tap (13) comprising a shut-off valve (14) located in the gas passage (17), the shut-off valve (14) comprising a shutter (7, 10) element which is movable relative to a valve seat (11) between a closed position and at least one open position to selectively close or open the gas passage (17), the tap comprising a pivoting lever (1) which is mechanically coupled to the shutter element (7, 10) so that rotation of the lever (1) between a first position and a second position causes motion of the shutter element (7, 10) between the closed and open positions, wherein the shut-off valve comprises two distinct shutter (7, 10) elements, respectively first shutter (7) element and second (10) shutter element, the two shutter elements (7, 10) being movable relative to the valve seat (11) between respective closed and open positions, in their respective open positions the two shutter elements (7, 10) defining respective flow passage sections in the gas passage (17), the shut-off valve (14) being configured so that, when the lever is moved from its first position to its second position it causes first the motion of the first shutter (7) toward it open position before causing the motion of second shutter (10) toward its open position, the flow passage section opened by the first shutter (7) being smaller than the flow passage section opened by the second shutter (10), the tap comprising a common resilient element such as a spring (9) biasing both first and second shutter elements (7, 10) toward their closed position, resilient member (9) being arranged in the gas passage (17) so that one first of its ends stands on a fixed abutment in the body (16) and a second end pushes the second shutter element (10) and also the first shutter element (7) toward the seat (11), the pivoting lever (1) being mechanically coupled to the valve shutter via a cam (22) or eccentric cooperating with a mobile transmission pin (5) **characterized in that** the mechanism coupling the pivoting lever (1) to the valve shutter comprises a transmission spring (3) located in series between the lever (1) and the transmission pin (5) and the transmission spring ends (3) are held between respectively a cap (2) in contact with a cam linked to the lever (1) and a plate (4) in contact with the transmission pin (5).

2. Pressurized fluid cylinder tap according to claim 1, **characterized in that** first shutter element (7) and second shutter element (10) are movable relative to the valve seat (11) according to a linear motion along a longitudinal direction (20) and, wherein, first and second shutters (7, 10) are mounted concentrically around the longitudinal direction (20).

3. Pressurized fluid cylinder tap according to any of claims 1 to 2, **characterized in that** first shutter (7) element is mounted mobile relative to the second shutter element (10) within said second shutter element (10).

4. Pressurized fluid cylinder tap according to claim 3, **characterized in that** the second shutter element (10) comprises an internal passage having a determined flow section, the first shutter (7) element being mobile within said internal passage, between a closed position closing the internal passage and an open position opening the internal passage, the tap comprising a resilient member (9) such as a spring urging the first shutter (7) toward its closed position.

5. Pressurized fluid cylinder tap according to claims any of 1 to 4, **characterized in that** the transmission pin (5) comprises an upstream end (23) for mechanically cooperating with an downstream end of the valve shutter in order to move said valve shutter from the closed position to the open position when the lever (1) is pivoted between its first and second positions, and wherein, when the two shutter elements (7, 10) are in their closed position; the first shutter (7) element comprises an downstream end (21) which is closer to the upstream end (23) of the transmission pin (5) than the downstream end of the second shutter element (10), so that first shutter element (7) is actuated and moved in its open position by the transmission pin (5) before the second shutter element (10).

6. Pressurized fluid cylinder tap according to any of claims 1 to 5, **characterized in that** the shut-off valve is configured so that, when the gas pressure in the upstream end (18) exceeds a defined pressure difference threshold with respect to the downstream end (19), the gas pressure urges the second shutter element (10) toward its closed position and, when first shutter (7) is opened, the gas flow from upstream to downstream makes the gas pressure difference between upstream end (18) and the downstream end (19) reduced thus lowering the effort needed to move the second shutter element (10) toward its open position.

7. Pressurized fluid cylinder tap according to any of claims 1 to 6, **characterized in that** when the lever (1) is moved from its first position to its second position, it actuates the motion of the first shutter (7) toward its open position so that only first shutter element (7) is open and, afterwards, the second shutter (10) is also moved toward its open position so that both shutter elements (7, 10) are opened and, when the lever (1) is moved from its second position to its first position it causes both shutter elements (7, 10) to come back to their closed positions.

8. Pressurized fluid cylinder tap according to any of claims 1 to 7, **characterized in that** the ratio between the flow passage section opened by the first shutter (7) and the flow passage section opened by the second shutter (10) is lower than 20% and preferably lower than 5%.

9. A pressurized fluid cylinder comprising a tap according to any of preceding claims.

## Patentansprüche

1. Druckflüssigkeitszylinderhahn (13), umfassend einen Körper (16), der einen Gasdurchlass (17) umschließt, wobei der Gasdurchlass (17) ein stromaufwärts liegendes Ende (18) und ein stromabwärts liegendes Ende (19) aufweist, der Hahn (13) ein Absperrventil (14) umfasst, das im Gasdurchlass (17) gelegen ist, das Absperrventil (14) ein Verschluss- (7, 10) Element umfasst, das relativ zu einem Ventilsitz (11) zwischen einer geschlossenen Position und mindestens einer offenen Position bewegbar ist, um den Gasdurchlass (17) selektiv zu schließen oder zu öffnen, wobei der Hahn einen Schwenkhebel (1) umfasst, der mechanisch an das Verschlusselement (7, 10) gekoppelt ist, sodass eine Drehung des Hebels (1) zwischen einer ersten Position und einer zweiten Position eine Bewegung des Verschlusselements (7, 10) zwischen der geschlossenen und offenen Position veranlasst, wobei das Absperrventil zwei einzelne Verschluss- (7, 10) Elemente umfasst, ein erstes Verschluss- (7) Element bzw. ein zweites (10) Verschlusselement, wobei die zwei Verschlusselemente (7, 10) relativ zum Ventilsitz (11) zwischen einer geschlossenen bzw. offenen Position bewegbar sind, wobei die zwei Verschlusselemente (7, 10) in ihren jeweiligen offenen Position entsprechende Strömungsdurchlassabschnitte im Gasdurchlass (17) definieren, wobei das Absperrventil (14) so konfiguriert ist, dass, wenn der Hebel aus seiner ersten Position in seine zweite Position bewegt wird, er zuerst die Bewegung des ersten Verschlusses (7) in seine offene Position veranlasst, bevor er die Bewegung des zweiten Verschlusses (10) in seine offene Position veranlasst, der Strömungsdurchlassabschnitt, der durch den ersten Verschluss (7) geöffnet wird, kleiner ist als der Strömungsdurchlassabschnitt, der durch den zweiten Verschluss (10) geöffnet wird, wobei der Hahn ein gemeinsames elastisches Element, wie eine Feder (9), umfasst, die sowohl das erste wie auch zweite Verschlusselement (7, 10) in deren geschlossene Position spannt, wobei das elastische Element (9) im Gasdurchlass (17) so angeordnet ist, dass ein erstes seiner Enden auf einer feststehenden Auflage im Körper (16) steht und ein zweites Ende das zweite Verschlusselement (10) und auch das erste Verschlusselement (7) zum Sitz (11) schiebt, wobei der Schwenkhebel (1) mechanisch durch eine Nocke (22) an den Ventilverschluss gekoppelt ist oder exzentrisch mit einem mobilen Übertragungsstift (5) zusammenwirkt, **dadurch gekennzeichnet, dass** der Mechanismus, der den Schwenkhebel (1) an den Ventilverschluss koppelt, eine Übertragungsfeder (3) umfasst, die in Reihe zwischen dem Hebel (1) und dem Übertragungsstift (5) gelegen ist, und dass die Enden der Übertragungsfeder (3) jeweils zwischen einer Kappe (2) in Kontakt mit einer Nocke, die mit dem Hebel (1) verbunden ist, und einer Platte (4) in Kontakt mit dem Übertragungsstift (5) gehalten werden.

2. Druckflüssigkeitszylinderhahn nach Anspruch 1, **dadurch gekennzeichnet, dass** das erste Verschlusselement (7) und zweite Verschlusselement (10) relativ zum Ventilsitz (11) gemäß einer linearen Bewegung entlang einer Längsrichtung (20) bewegbar sind und wobei der erste und zweite Verschluss (7, 10) konzentrisch um die Längsrichtung (20) montiert sind.

3. Druckflüssigkeitszylinderhahn nach einem der Ansprüche 1 bis 2, **dadurch gekennzeichnet, dass** das erste Verschluss- (7) Element relativ zum zweiten Verschlusselement (10) innerhalb des zweiten Verschlusselements (10) beweglich montiert ist.

4. Druckflüssigkeitszylinderhahn nach Anspruch 3, **dadurch gekennzeichnet, dass** das zweite Verschlusselement (10) einen inneren Durchlass mit einem vorbestimmten Strömungsabschnitt umfasst, das erste Verschluss- (7) Element innerhalb des inneren Durchlasses zwischen einer geschlossenen Position, die den inneren Durchlass verschließt, und einer offenen Position, die den inneren Durchlass öffnet, beweglich ist, wobei der Hahn ein elastisches Element (9), wie eine Feder, umfasst, das den ersten Verschluss (7) in seine geschlossene Position spannt.

5. Druckflüssigkeitszylinderhahn nach einem der Ansprüche 1 bis 4, **dadurch gekennzeichnet, dass** der Übertragungsstift (5) ein stromaufwärts liegendes Ende (23) zum mechanischen Zusammenwirken mit einem stromabwärts liegenden Ende des Ventilverschlusses umfasst, um den Ventilverschluss aus der geschlossenen Position in die offene Position zu bewegen, wenn der Hebel (1) zwischen seiner ersten und zweiten Position geschwenkt wird, und wobei, wenn die zwei Verschlusselemente (7, 10) in ihrer geschlossenen Position sind; das erste Verschluss (7) Element ein stromabwärtsliegendes Ende (21) umfasst, das näher beim stromabwärts liegenden Ende (23) des Übertragungsstifts (5) liegt als das stromabwärtsliegende Ende des zweiten Verschlusselements (10), sodass das erste Verschlusselement (7) durch den Übertragungsstift (5) vor dem zweiten Verschlusselement (10) betätigt und in seine offene Position bewegt wird.

6. Druckflüssigkeitszylinderhahn nach einem der Ansprüche 1 bis 5, **dadurch gekennzeichnet, dass** das Absperrventil so konfiguriert ist, dass, wenn der Gasdruck im stromaufwärtsliegenden Ende (18) einen definierten Druckdifferenzschwellenwert in Bezug auf das stromabwärtsliegende Ende (19) übersteigt, der Gasdruck das zweite Verschlusselement (10) in seine geschlossene Position drängt, und, wenn der erste Verschluss (7) geöffnet ist, der Gasstrom von stromaufwärts zu stromabwärts die Gasdruckdifferenz zwischen dem stromaufwärts liegenden Ende (18) und dem stromabwärts liegenden Ende (19) geringer macht, wodurch der Aufwand verringert wird, der notwendig ist, um das zweite Verschlusselement (10) in seine offene Position zu bewegen.

7. Druckflüssigkeitszylinderhahn nach einem der Ansprüche 1 bis 6, **dadurch gekennzeichnet, dass**, wenn der Hebel (1) aus seiner ersten Position in seine zweite Position bewegt wird, er die Bewegung des ersten Verschlusses (7) in seine offene Position bewirkt, sodass nur das erste Verschlusselement (7) offen ist, und danach das zweite Verschlusselement (10) ebenso in seine offene Position bewegt wird, sodass beide Verschlusselemente (7, 10) geöffnet sind, und, wenn der Hebel (1) aus seiner zweiten Position in seine erste Position bewegt wird, er bewirkt, dass beide Verschlusselemente (7, 10) in ihre geschlossene Position zurückkehren.

8. Druckflüssigkeitszylinderhahn nach einem der Ansprüche 1 bis 7, **dadurch gekennzeichnet, dass** das Verhältnis zwischen dem Strömungsdurchlassabschnitt, der durch den ersten Verschluss (7) geöffnet wird, und dem Strömungsdurchlassabschnitt, der durch den zweiten Verschluss (10) geöffnet wird, kleiner als 20 % und vorzugsweise kleiner als 5 % ist.

9. Druckflüssigkeitszylinderhahn, umfassend einen Hahn nach einem der vorstehenden Ansprüche.

## Revendications

1. Robinet de cylindre à fluide sous pression (13) comprenant un corps (16) enserrant un passage de gaz (17), le passage de gaz (17) comprenant une extrémité amont (18) et une extrémité aval (19), le robinet (13) comprenant une vanne d'arrêt (14) située dans le passage de gaz (17), la vanne d'arrêt (14) comprenant un élément obturateur (7, 10) qui peut se déplacer par rapport à un siège de vanne (11) entre une position fermée et au moins une position ouverte pour fermer ou ouvrir sélectivement le passage de gaz (17), le robinet comprenant un levier pivotant (1) qui est couplé mécaniquement à l'élément obturateur (7, 10) de manière que la rotation du levier (1) entre une première position et une seconde position entraîne le déplacement de l'élément obturateur (7, 10) entre les positions fermée et ouverte, dans lequel la vanne d'arrêt comprend deux éléments obturateurs distincts (7, 10), respectivement un premier élément obturateur (7) et un second élément obturateur (10), les deux éléments obturateurs (7, 10) étant mobiles par rapport au siège de vanne (11) entre des positions ouverte et fermée respectives, dans leurs positions ouvertes respectives, les deux éléments obturateurs (7, 10) définissant des sections de passage d'écoulement respectives dans le passage de gaz (17), la vanne d'arrêt (14) étant configurée de sorte que, lorsque le levier est déplacé de sa première position à sa seconde position, il provoque d'abord le déplacement du premier obturateur (7) vers sa position ouverte avant de provoquer le déplacement du second obturateur (10) vers sa position ouverte, la section de passage d'écoulement ouverte par le premier obturateur (7) étant plus petite que la section de passage d'écoulement ouverte par le second obturateur (10), le robinet comprenant un élément élastique commun tel qu'un ressort (9) pressant à la fois le premier et le second élément obturateur (7, 10) vers leur position fermée, l'élément élastique (9) étant agencé dans le passage de gaz (17) de sorte qu'une première de ses extrémités se trouve sur une butée fixe dans le corps (16) et qu'une seconde extrémité presse le second élément obturateur (10) et également le premier élément obturateur (7) vers le siège (11), le levier pivotant (1) étant couplé mécaniquement à l'obturateur de vanne via une came (22) ou un excentrique coopérant avec une broche de transmission mobile (5), **caractérisé en ce que** le mécanisme couplant le levier pivotant (1) à l'obturateur de vanne comprend un ressort de transmission (3) situé en série entre le levier (1) et la broche de transmission (5) et les extrémités (3) du ressort de transmission sont maintenues entre respectivement un chapeau (2) en contact avec une came liée au levier (1) et une plaque (4) en contact avec la broche de transmission (5).

2. Robinet de cylindre à fluide sous pression selon la revendication 1, **caractérisé en ce que** le premier élément obturateur (7) et le second élément obturateur (10) sont mobiles par rapport au siège de vanne (11) selon un mouvement linéaire le long d'une direction longitudinale (20) et dans lequel le premier et le second obturateur (7, 10) sont montés de manière concentrique autour de la direction longitudinale (20).

3. Robinet de cylindre à fluide sous pression selon l'une quelconque des revendications 1 à 2, **caractérisé en ce que** le premier élément obturateur (7) est monté mobile par rapport au second élément obturateur (10) à l'intérieur dudit second élément obturateur (10).

4. Robinet de cylindre à fluide sous pression selon la revendication 3, **caractérisé en ce que** le second élément obturateur (10) comprend un passage interne ayant une section d'écoulement déterminée, le premier élément obturateur (7) étant mobile à l'intérieur dudit passage interne entre une position fermée fermant le passage interne et une position ouverte ouvrant le passage interne, le robinet comprenant un élément élastique (9) tel qu'un ressort pressant le premier obturateur (7) vers sa position fermée.

5. Robinet de cylindre à fluide sous pression selon l'une quelconque des revendications 1 à 4, **caractérisé en ce que** la broche de transmission (5) comprend une extrémité amont (23) pour coopérer mécaniquement avec une extrémité aval de l'obturateur de vanne afin de déplacer ledit obturateur de vanne de la position fermée à la position ouverte lorsque le levier (1) est soumis à un pivotement entre sa première et sa seconde position et dans lequel, lorsque les deux éléments obturateurs (7, 10) sont dans la position fermée ; le premier élément obturateur (7) comprend une extrémité aval (21) qui est plus proche de l'extrémité amont (23) de la broche de transmission (5) que l'extrémité aval du second élément obturateur (10) de sorte que le premier élément obturateur (7) est actionné et déplacé dans sa position ouverte par la broche de transmission (5) avant le second élément obturateur (10).

6. Robinet de cylindre à fluide sous pression selon l'une quelconque des revendications 1 à 5, **caractérisé en ce que** la vanne d'arrêt est configurée de sorte que, lorsque la pression du gaz dans l'extrémité amont (18) dépasse un seuil de différence de pression défini par rapport à l'extrémité aval (19), la pression du gaz presse le second élément obturateur (10) vers sa position fermée et que, lorsque le premier obturateur (7) est ouvert, l'écoulement de gaz d'amont en aval réduit la différence de pression de gaz entre l'extrémité amont (18) et l'extrémité aval (19), en diminuant de la sorte l'effort nécessaire pour déplacer le second élément obturateur (10) vers sa position ouverte.

7. Robinet de cylindre à fluide sous pression selon l'une quelconque des revendications 1 à 6, **caractérisé en ce que**, lorsque le levier (1) est déplacé de sa première position à sa seconde position, il actionne le déplacement du premier obturateur (7) vers sa position ouverte de sorte que seul le premier élément obturateur (7) est ouvert et qu'ensuite le second obturateur est également déplacé vers sa position ouverte de sorte que les deux éléments obturateurs (7, 10) sont ouverts et que, lorsque le levier (1) est déplacé de sa seconde position à sa première position, il amène les deux éléments obturateurs (7, 10) à regagner leurs positions fermées.

8. Robinet de cylindre à fluide sous pression selon l'une quelconque des revendications 1 à 7, **caractérisé en ce que** le rapport entre la section de passage d'écoulement ouverte par le premier obturateur (7) et la section de passage d'écoulement ouverte par le second obturateur (10) est inférieur à 20 % et, de préférence, inférieur à 5 %.

9. Cylindre à fluide sous pression comprenant un robinet selon l'une quelconque des revendications précédentes.
